# EUROPEAN PATENT SPECIFICATION

(11) **EP 2 568 583 B1**
(45) Date of publication and mention of the grant of the patent: **27.07.2016**
(21) Application number: 11180962.0
(22) Date of filing: 12.09.2011
(51) Int. Cl.: H02K 11/00, G01J 5/00, G01J 5/08, G01J 5/02, G01J 5/52

(54) **Temperature monitoring device for electric motor**
Temperaturüberwachungsvorrichtung für elektrischen Motor
Dispositif de surveillance de température pour un moteur éléctrique

(43) Date of publication of application: 13.03.2013
(73) Proprietor: ALSTOM Renewable Technologies, 38100 Grenoble (FR)
(72) Inventor: Haffner, Ken Yves, 5400 Baden (CH); Schwery, Alexander, 5024 Küttingen (CH)
(74) Representative: General Electric Technology GmbH

(56) References cited:
- EP-B1- 1 588 123
- DE-A1- 2 522 621
- JP-A- 5 296 828
- JP-A- 62 081 619
- US-A- 3 798 366
- US-A- 4 955 979
- AVDOSHIN E S: "A TWO-CHANNEL LIGHT-GUIDE IR RADIOMETER WITH SEMICONDUCTOR MODULATOR", MEASUREMENT TECHNIQUES, CONSULTANTS BUREAU. NEW YORK, US, vol. 34, no. 3, 1 March 1991 (1991-03-01), pages 233-236, XP000271348, ISSN: 0543-1972, DOI: 10.1007/BF00978790

## Description

### TECHNICAL FIELD

The present invention relates to a monitoring device.

In particular the monitoring device can be used to monitor an electric machine such as a hydro generator (i.e. a generator to be connected to a hydro motor such as a hydro turbine). Naturally the monitoring device can also be used together with other electric machines, such as turbo generators (i.e. generators to be connected to gas or steam turbines) or electric motors. In the following reference to a hydro generator is made.

### BACKGROUND

During development of new generators or also during monitoring of existing generators (for example in view of an upgrade thereof) the temperatures to which the stator and rotor are actually subjected must be checked.

In fact, the conductive bar insulation of the stator and rotor has a maximum operating temperature that must not be overcome, because in this case the electrical properties of the insulation rapidly decrease.

Checking of the rotor temperature during operation is particularly troubling, because of the relative movement between the rotor and the monitoring devices (that are usually fixed to the stator) and the high speed of the rotor.

Typically, in order to measure the rotor temperature, sensors are provided on the rotor surface.

For example surface acoustic sensors can be used.

These surface acoustic sensors have the drawback that they are able to measure only localised temperatures on fixed points on the rotor (namely the temperature at the position where they are located), such that the risk exists that during measuring the temperature at a hot or cold spot is measured; it is clear that this temperature is different from the temperature of other parts of the rotor.

Alternatively, the rotor temperature can be calculated on the basis of the excitation voltage and current.

Nevertheless the temperature measures that can be achieved this way are not accurate.

For the reasons above, during design of a new electric machine or when studying an upgrade, large safety factors are commonly used, such that the electric machines operate at a temperature largely below the maximum achievable temperature.

In order to increase output power (especially for high speed electric machines but also for traditional electric machines) and efficiency, the operating temperature of the generators (in particular rotor) needs to be precisely known.

In fact, if the operating temperature of the rotor is precisely known, it is possible to design a new generator or electric machine or study a re-powering of an existing generator with a low safety margin (in particular lower than what currently needed) or it is possible to optimise the cooling system to increase its efficiency at zones where the rotor is hotter. A further possible measure is an optimisation of the cooling system such that it has lower ventilation losses (and consequently higher efficiencies).

EP 0 898 158 discloses a device for measuring the temperature on the basis of an optic signal emitted by a component of a gas turbine. This device has a collimator connected to optic fibres to be brought in correspondence of the component whose temperature has to be ascertained. An envelope to protect against high temperatures is also provided.

This device cannot be practically used in electric machines, because of the large dimensions thereof (in particular of the envelope and collimator) that prevent its insertion at a position close to the rotor.

Additionally, the device of EP 0 898 158 is optimised for operation at high temperatures (for example 200-1300 °C or more) because these temperatures usually occur in a gas turbine. The temperatures that can occur in an electric machine are much lower (usually between room temperature and 150 °C); at these much lower temperatures the device of EP 0 898 158 cannot practically give any accurate measurement, because the temperatures of the electric machine are very close to the ambient temperature, such that a lot of noise and disturbance energy are measured.

### SUMMARY

An aspect of the present disclosure is thus to provide a monitoring device for the temperature, in particular for a rotor of an electric machine such as a hydro generator or a turbo generator or a permanent magnet machine.

This and further aspects are attained by a monitoring device as defined by claim 1.

### BRIEF DESCRIPTION OF THE DRAWINGS

Further characteristics and advantages of the invention will be more apparent from the description of a preferred but non-exclusive embodiment of the monitoring device, illustrated by way of non-limiting example in the accompanying drawings, in which:

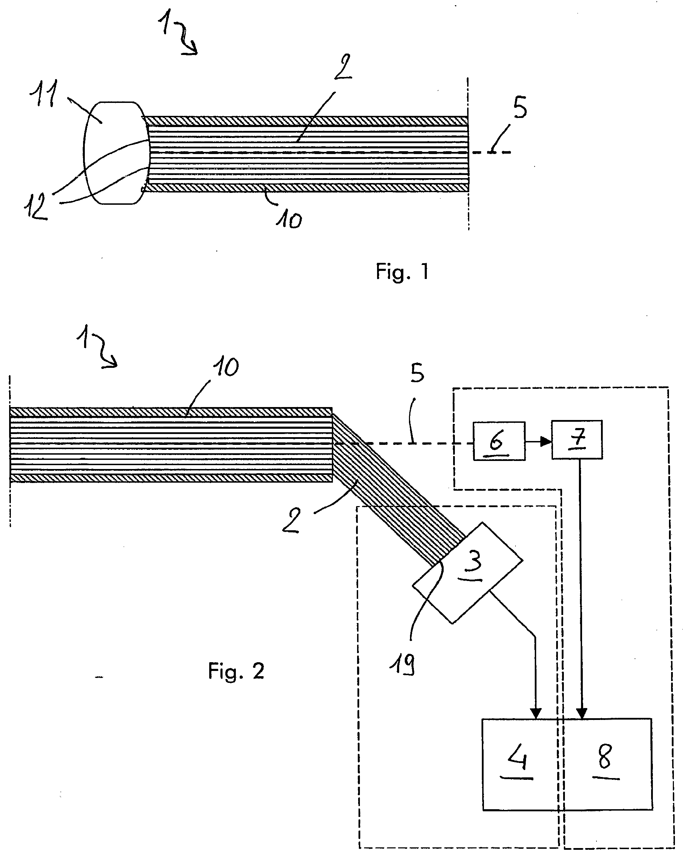

Figure 1 is a schematic view of a part of the device (this is the "probe", i.e. the part that during use is inserted into a cooling channel of a stator);
Figure 2 is a schematic view of another part of the device (this part is connected to the part shown in figure 1 and is outside of the stator);
Figures 3 and 4 schematically show a detector;
Figure 5 schematically shows an electric signal measured by the detector;
Figure 6 schematically shows the part of the device of figure 1 inserted into a cooling channel of a hydro generator; and
Figure 7 schematically shows a different embodiment of a detector.

### DETAILED DESCRIPTION OF EMBODIMENTS OF THE INVENTION

With reference to the figures, these show a monitoring device 1 in particular for the surface of a rotor of an electric machine.

The device 1 comprises one or more first optic fibres 2, for carrying a first optic signal, connected to a first detector 3, for converting the first optic signal into a first electric signal. The first detector 3 is in turn connected to a first process unit 4 to process the first electric signal and ascertain the temperature of a component emitting the first optic signal.

In addition, the device 1 also comprises one or more second optic fibres 5 for carrying a second optic signal connected to an optic process unit 6 for ascertaining a third optic signal indicative of a distance to be measured, a second detector 7 connected to the optic process unit 6 for converting the third optic signal into a second electric signal and a second process unit 8 connected to the second detector 7 to process the second electric signal and ascertain a distance of a component emitting the second optic signal. In this case also a light source such as a laser source is preferably provided.

In addition, a sheath 10 is provided that contains the first optic fibres 2 and the second optic fibres 5.

The device also includes a collimator 11 (such as a lens) in front of mouths 12 of the first and second optic fibres 2, 5, to direct the light into them.

The first process unit 4 and the second process unit 8 can be defined by one electronic device having circuits implementing the functions of both the first and the second process unit 4, 8 (for example it can be a PC with a dedicated program). The combination of the signals from the first and second optic fibres 2, 5 allows to have at the same time a high temperature resolution with an exact position (high space resolution).

In a preferred embodiment, the first optic fibres 2 include a plurality of optic fibres and the second optic fibres 10 include one single optic fibre.

In addition, the first optic fibres 2 preferably consists of multi-mode fibres (because multi-mode fibres have a large cross section and can carry large energy) and the second optic fibre 5 consist of mono-mode fibres (because even if mono-mode fibres have small cross section and thus carry small energy, such energy is often not needed at the second detector 7 and process unit 8, but space can be saved thanks to the smaller diameter of the mono-mode optic fibres when compared to the multi-mode optic fibres).

The first process unit 4 is arranged to ascertain the temperature of components located in front of the collimator 11.

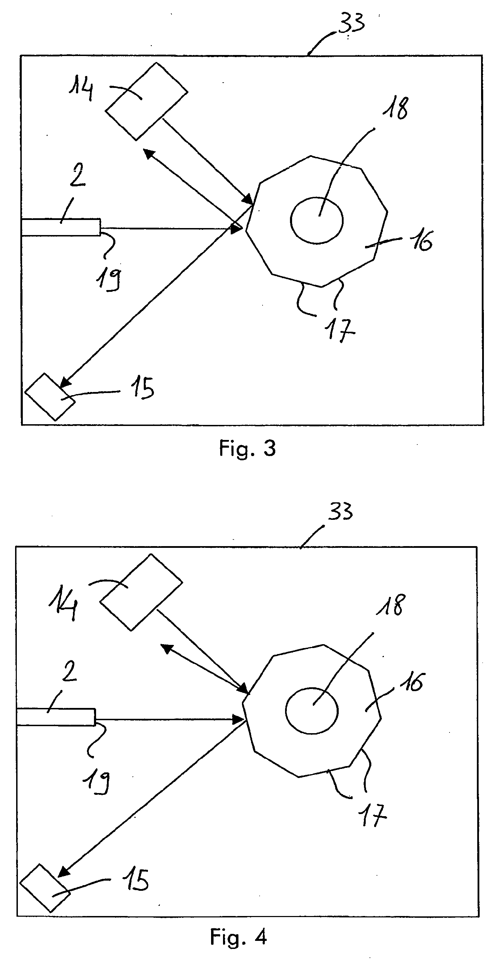

As shown in figures 3 and 4, the first detector 3 includes a component 14 at a reference temperature and a sensor 15 receiving the first optic signal from the first optic fibre 2 and a signal from the component 14 at the reference temperature and arranged to elaborate a signal indicative of the differential temperature between the temperature of a source of radiation detected via the first optic fibres 2 and the temperature of the component 14 at a reference temperature. The sensor 15 can for example be an infrared sensor (preferably a mid range infrared sensor).

In particular a wheel 16 is provided having a plurality of plane mirrors 17 over its whole circumference. In the example only eight mirrors are shown, in preferred embodiments the number of mirrors 17 is anyhow much higher, such as for example thirty, thirty two mirrors or more. The wheel 16 is connected to a motor 18 that makes it rotate at a high speed to achieve the required resolution.

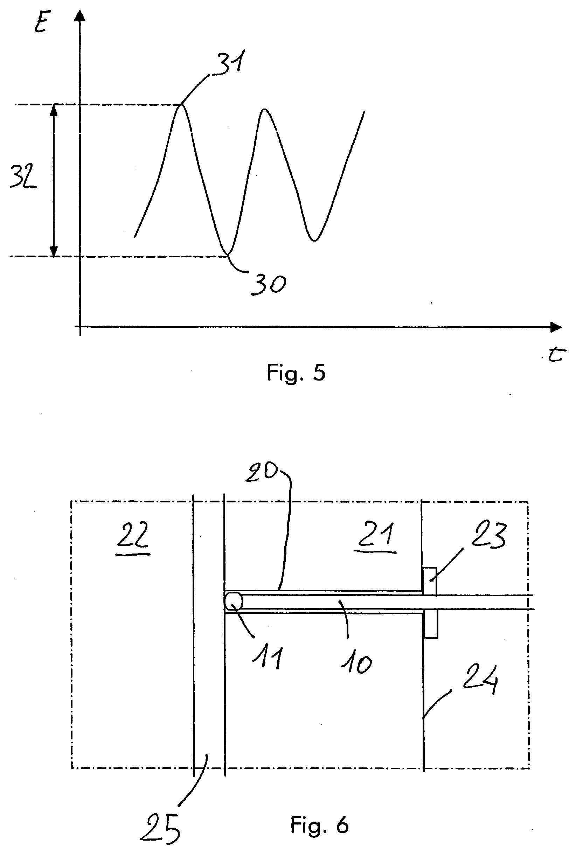

The wheel 16 is located in such a position facing the component 14, the first optic fibres 2 (in particular mouths 19 thereof opposite those mouths 12 at the collimator 11) and the sensor 15. While the wheel 16 rotates it reflects the first optic signal (coming from the first optic fibres 2) towards the sensor 15 (figure 4) or the signal from the component 14 towards the same sensor 15 (figure 3). The electric signal that is detected at the sensor 15 is schematically shown in figure 5; in this figure the points 30 correspond to the signal emitted by the component 14 and the points 31 correspond to the signal received through the first optic fibres 2 (i.e. the first optic signal); the positions in-between are due to the increasing and decreasing signal seen by the sensor 15 because of the rotation of the wheel 16. In addition, reference 32 indicates the signal indicative of the differential temperature.

Thanks to the modulated signal at the sensor 15 and to the fact that the differential signal 32 is used, the effect of noise and disturbances from the environment can be avoided.

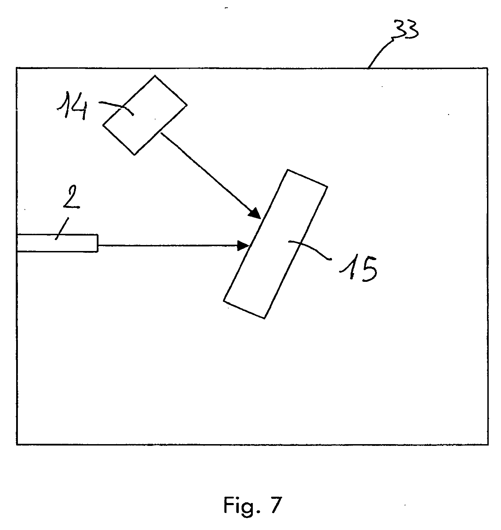

In an alternative to the invention figure 7), instead of the wheel 16, the sensor 15 can include an electro optical modulating device like an acousto-optic modulator or a micro machine mechanical device (MEMS).

Advantageously, the detector 3 has a housing 33 that is kept at a constant temperature (this temperature is the temperature of the component 14.

The first process unit 4 can implement look up tables that associate the signal indicative of the differential temperature to the temperature of the component in front of the first fibre mouths 12.

Alternatively the first process unit 4 can be arranged to calculate the temperature of the source of the first optic signal in real time. This solution is preferred because at low temperatures the look up table gives large discretization. For example this can be done by calculating the Plank formula in real time.

The second process unit 8 is arranged to measure a distance.

In this respect the laser source, the optic process unit 6, the second detector 7 and the second process unit 8 can be similar to those described in EP 1 588 123.

In addition the sheath 10, first fibres 2 and second fibre 5 do not include any active components; this is useful to avoid disturbances from the electric and magnetic fields usually present in an electric machines. Advantageously also the collimator 11 (that is a lens) does not include any active components.

For measurements through parts of the machine at high electrical potential, for example winding overhang, the materials of the collimator 11, sheath 10 optic fibres 2 and 5 is preferably a non metallic material; this hinders or reduces electromagnetic field influences.

The operation of the monitoring device is substantially the following; the monitoring device is used to monitor an electric machine.

One or more devices are applied on an electric machine (for example hydro generators, but also turbo generators, electric motors or other machines are possible). In particular when more devices are used, they are preferably applied at different axial and/or circumferential positions. Likewise, when one device is used, it is preferably applied at different axial and/or circumferential positions. Each device can give a measure of the whole circumference of the rotor.

In order to apply a device, the collimator 11 and sheath 10 are introduced into a cooling channel 20 of a stator 21 of an electric machine, bringing the collimator 11 at the end of the cooling channel 20 at a position facing a rotor 22 and close to it, but not in contact with it.

In order to find the right position for the collimator 11, first optic fibres 2 and second optic fibres 5 without any risks of making the collimator 11 touch the rotor 22 (tests are carried out during operation and this situation would thus be very troubling) spacers 23 can be provided to predefine the positioning of the sheath 10.

Spacers 23 can be elements that can slide on the sheath 10 and can be fixed to it (for example by screws), such that they are correctly located onto the sheath 10 and the sheath 10 is then introduced into a cooling channel 20 until the spacer 23 rests on the stator outside wall 24. Naturally also spacers fixed to the sheath 10 at a given position thereof can be provided.

Then the electric machine is activated and the device ascertains:
- the temperature of the rotor surface that faces the collimator 11; this measure is achieved through the first process unit 4 or the circuit implementing it, and
- the distance between the collimator 11 and the rotor surface, thus in other words (since the position of the collimator 11 is known for example thanks to the spacer 23) the width of the gap 25 between the stator 21 and rotor 22 can be measured; this measure is achieved through the second process unit 8 or the circuits implementing it.

Both these measures give indication of measures to counteract temperature increase or control the temperature in electric machines. In particular, the combination of the signals from the first and second optic fibres allows to have at the same time a high temperature resolution with an exact position (high space resolution).

While the indications that can be obtained from a temperature measure are clear, in the following some details on the indications that can be obtained from the gap width are given.

The gap width influences the circulation of the cooling fluid and therefore it indirectly influences the temperature of the stator and rotor part close to it. Typically a large gap allows a large cooling fluid circulation and thus lower temperatures of stator and rotor part close to it.

In practice the materials used and the dimensions can be chosen at will according to requirements and to the state of the art.

### REFERENCE NUMBERS

- 1: device
- 2: first optic fibres
- 3: first detector
- 4: first process unit
- 5: second optic fibres
- 6: optic process unit
- 7: second detector
- 8: second process unit
- 10: sheath
- 11: collimator
- 12: mouth
- 14: component at a reference temperature
- 15: sensor
- 16: wheel
- 17: mirror
- 18: motor
- 19: mouth
- 20: cooling channel
- 21: stator
- 22: rotor
- 23: spacer
- 24: outside wall
- 25: gap
- 30: signal point
- 31: signal point
- 32: signal indicative of the differential temperature
- 33: housing

## Claims

1. Monitoring device (1) for an electric machine comprising a rotor, the monitoring device (1) comprising:
at least a first optic fibre (2) for carrying a first optic signal,
a first detector (3) connected to the at least a first optic fibre (2) for converting the first optic signal into a first electric signal,
a first process unit (4) connected to the first detector (3) to process the first electric signal and
ascertaining the temperature of the rotor emitting the first optic signal,
the first detector (3) includes:
a component (14) at a reference temperature,
a sensor (15) receiving the first optic signal from the first optic fibre and a signal from the component (14) at the reference temperature and arranged to elaborate a signal indicative of the differential temperature between the temperature of the rotor and
the temperature of the component (14) at a reference temperature,
**characterised in that**
the device further comprises
at least a second optic fibre (5) for carrying a second optic signal,
an optic process unit (6) connected to the at least a second optic fibre (5) for ascertaining a third optic signal indicative of a distance to the rotor to be measured,
a second detector (7) connected to the optic process unit (6) for converting the third optic signal into a second electric signal,
a second process unit (8) connected to the second detector (7) to process the second electric signal and ascertain the distance of the rotor,
a sheath (10) is provided that contains the at least a first optic fibre (2) and the at least a second optic fibre (5), a collimator (11) is provided in front of the mouths (12) of at least the first optic fibre (2) and the second optic fibre (5) to direct light from the rotor into them, spacers (23) are provided comprising elements that can slide on the sheath (10) and can be fixed to it to predefine a positioning of the at least a first optic fibre (2) and the second optic fibre (5) in a cooling channel (20) of the electric machine when the spacers (23) are fixed on the sheath (10),
the first detector (3) additionally includes a wheel (16) having a plurality of mirrors (17) over its circumference, the wheel (16) being connected to a motor (18) that makes it rotate, the wheel (16) being located at a position facing the component (14) at the reference temperature and the first optic fibres (2) and the sensor (15), the wheel reflects the first optic signal coming from the first optic fibres (2) towards the sensor (15) or the signal from the component (14) towards the same sensor (15).

2. Device (1) according to claim 1, **characterised in that** the first process unit (4) and the second. process unit (8) are defined by circuits of one electronic unit.

3. Device (1) according to claim 1, **characterised in that** the at least a first optic fibre (2) includes a plurality of optic fibres and the at least a second optic fibre (5) includes one optic fibre.

4. Device (1) according to claim 1, **characterised in that** the at least a first optic fibre (2) consists of multi-mode fibres.

5. Device (1) according to claim 1, **characterised in that** the at least a second optic fibre (5) consists of mono-mode fibres.

6. Device (1) according to claim 1, **characterised in that** the first process unit (4) implements look up tables.

7. Device (1) according to claim 1, **characterised in that** the first process unit (4) is arranged to calculate the temperature of the source of the first optic signal in real time.

8. Device (1) according to claim 1, **characterised in that** the sheath (10), at least a first fibre (2) and at least a second fibre (5) do not include any active components.

9. Device (1) according to claim 1, **characterised in that** the device is configured to monitor an electric machine.

10. Device (1) according to claim 1, **characterised in that** the sensor (15) includes an acousto-optic modulator or a micro machine mechanical device.

## Patentansprüche

1. Überwachungsvorrichtung (1) für eine elektrische Maschine, die einen Rotor umfasst, wobei die Überwachungsvorrichtung (1) Folgendes umfasst:
mindestens einen ersten Lichtwellenleiter (2) zum Übertragen eines ersten optischen Signals,
einen ersten Detektor (3), der mit dem mindestens einen ersten Lichtwellenleiter (2) verbunden ist, um das erste optische Signal in ein erstes elektrisches Signal umzuwandeln,
eine erste Verarbeitungseinheit (4), die mit dem ersten Detektor (3) verbunden ist, um das erste elektrische Signal zu verarbeiten, und die Temperatur des Rotors, der das erste optische Signal emittiert, bestimmt,
wobei der erste Detektor (3) Folgendes enthält:
eine Komponente (14) auf einer Referenztemperatur,
einen Sensor (15), der das erste optische Signal von dem ersten Lichtwellenleiter und ein Signal von der Komponente (14) bei der Referenztemperatur empfängt und dazu ausgelegt ist, ein Signal auszuarbeiten, das auf die Differenztemperatur zwischen der Temperatur des Rotors und der Temperatur der Komponente (14) bei einer Referenztemperatur hinweist,
**dadurch gekennzeichnet, dass**
die Vorrichtung ferner Folgendes umfasst:
mindestens einen zweiten Lichtwellenleiter (5) zum Übertragen eines zweiten optischen Signals,
eine Einheit (6) zur optischen Verarbeitung, die mit dem mindestens einen zweiten Lichtwellenleiter (5) verbunden ist, um ein drittes optisches Signal zu bestimmen, das auf einen Abstand zu dem Rotor, der gemessen werden soll, hinweist,
einen zweiten Detektor (7), der mit der Einheit (6) zur optischen Verarbeitung verbunden ist, um das dritte optische Signal in ein zweites elektrisches Signal umzuwandeln,
eine zweite Verarbeitungseinheit (8), die mit dem zweiten Detektor (7) verbunden ist, um das zweite elektrische Signal zu verarbeiten und den Abstand des Rotors zu bestimmen,
wobei eine Ummantelung (10) vorgesehen ist, die den mindestens einen ersten Lichtwellenleiter (2) und den mindestens einen zweiten Lichtwellenleiter (5) enthält, wobei ein Kollimator (11) vor den Mündungen (12) mindestens des ersten Lichtwellenleiters (2) und des zweiten Lichtwellenleiters (5) vorgesehen ist, um Licht von dem Rotor in sie zu leiten, wobei Abstandshalter (23) vorgesehen sind, die Elemente umfassen, die auf die Ummantelung (10) geschoben und daran befestigt werden können, um eine Positionierung mindestens eines ersten Lichtwellenleiters (2) und des zweiten Lichtwellenleiters (5) in einem Kühlkanal (20) der elektrischen Maschine vorzudefinieren, wenn die Abstandshalter (23) auf der Ummantelung (10) befestigt sind,
wobei der erste Detektor (3) zusätzlich ein Rad (16) enthält, das auf seinem Umfang mehrere Spiegel (17) besitzt, wobei das Rad (16) mit einem Motor (18) verbunden ist, der es zum Drehen bringt, wobei sich das Rad (16) an einer Position befindet, die der Komponente (14) auf der Referenztemperatur und den ersten Lichtwellenleitern (2) und dem Sensor (15) zugewandt ist, wobei das Rad das erste optische Signal, das von den ersten Lichtwellenleitern (2) kommt, zu dem Sensor (15) oder das Signal von der Komponente (14) zu dem gleichen Sensor (15) reflektiert.

2. Vorrichtung (1) nach Anspruch 1, **dadurch gekennzeichnet, dass** die erste Verarbeitungseinheit (4) und die zweite Verarbeitungseinheit (8) durch Schaltungen einer elektronischen Einheit definiert sind.

3. Vorrichtung (1) nach Anspruch 1, **dadurch gekennzeichnet, dass** der mindestens eine erste Lichtwellenleiter (2) mehrere Lichtwellenleiter enthält und der mindestens eine zweite Lichtwellenleiter (5) einen Lichtwellenleiter enthält.

4. Vorrichtung (1) nach Anspruch 1, **dadurch gekennzeichnet, dass** der mindestens eine erste Lichtwellenleiter (2) aus Multimoden-Fasern besteht.

5. Vorrichtung (1) nach Anspruch 1, **dadurch gekennzeichnet, dass** der mindestens eine zweite Lichtwellenleiter (5) aus Monomoden-Fasern besteht.

6. Vorrichtung (1) nach Anspruch 1, **dadurch gekennzeichnet, dass** die erste Verarbeitungseinheit (4) Umsetzungstabellen implementiert.

7. Vorrichtung (1) nach Anspruch 1, **dadurch gekennzeichnet, dass** die erste Verarbeitungseinheit (4) dazu ausgelegt ist, die Temperatur der Quelle des ersten optischen Signals in Echtzeit zu berechnen.

8. Vorrichtung (1) nach Anspruch 1, **dadurch gekennzeichnet, dass** die Ummantelung (10), mindestens eine erste Faser (2) und mindestens eine zweite Faser (5) keine aktiven Komponenten enthalten.

9. Vorrichtung (1) nach Anspruch 1, **dadurch gekennzeichnet, dass** die Vorrichtung konfiguriert ist, eine elektrische Maschine zu überwachen.

10. Vorrichtung (1) nach Anspruch 1, **dadurch gekennzeichnet, dass** der Sensor (15) einen akustooptischen Modulator oder eine mikromechanische Vorrichtung enthält.

## Revendications

1. Dispositif de surveillance (1) pour une machine électrique comprenant un rotor, le dispositif de surveillance (1) comprenant :
au moins une première fibre optique (2) pour transporter un premier signal optique,
un premier détecteur (3) connecté à l'au moins une première fibre optique (2) pour convertir le premier signal optique en un premier signal électrique,
une première unité de traitement (4) connectée au premier détecteur (3) pour traiter le premier signal électrique et vérifier la température du rotor émettant le premier signal optique,
le premier détecteur (3) comprend :
un composant (14) à une température de référence,
un capteur (15) recevant le premier signal optique de la première fibre optique et un signal du composant (14) à la température de référence, et agencé pour élaborer un signal indicatif de la différence de température entre la température du rotor et la température du composant (14) à une température de référence,
**caractérisé en ce que**
le dispositif comprend en outre
au moins une seconde fibre optique (5) pour transporter un deuxième signal optique,
une unité de traitement optique (6) connectée à l'au moins une seconde fibre optique (5) pour vérifier un troisième signal optique indicatif d'une distance au rotor à mesurer,
un second détecteur (7) connecté à l'unité de traitement optique (6) pour convertir le troisième signal optique en un deuxième signal électrique,
une seconde unité de traitement (8) connectée au second détecteur (7) pour traiter le second signal électrique et vérifier la distance du rotor,
une gaine (10) est pourvue, laquelle contient l'au moins une première fibre optique (2) et l'au moins une seconde fibre optique (5), un collimateur (11) est pourvu devant les extrémités (12) d'au moins la première fibre optique (2) et la second fibre optique (5) pour diriger la lumière provenant du rotor dans celles-ci, des entretoises (23) sont pourvues,
lesquelles comprennent des éléments qui peuvent coulisser sur la gaine (10) et peuvent être fixés à celle-ci pour prédéfinir un positionnement de l'au moins une première fibre optique (2) et de la seconde fibre optique (5) dans un canal de refroidissement (20) de la machine électrique lorsque les entretoises (23) sont fixées sur la gaine (10),
le premier détecteur (3) comprend en outre une roue (16) ayant une pluralité de miroirs (17) sur sa circonférence, la roue (16) étant connectée à un moteur (18) qui la fait tourner, la roue (16) étant située à un emplacement faisant face au composant (14) à la température de référence et aux premières fibres optiques (2) et au capteur (15), la roue réfléchit le premier signal optique provenant des premières fibres optiques (2) vers le capteur (15) ou le signal provenant du composant (14) vers le même capteur (15).

2. Dispositif (1) selon la revendication 1, **caractérisé en ce que** la première unité de traitement (4) et la seconde unité de traitement (8) sont définies par des circuits d'une unité électronique.

3. Dispositif (1) selon la revendication 1, **caractérisé en ce que** l'au moins une première fibre optique (2) comprend une pluralité de fibres optiques et l'au moins une seconde fibre optique (5) comprend une fibre optique.

4. Dispositif (1) selon la revendication 1, **caractérisé en ce que** l'au moins une première fibre optique (2) est constituée de fibres multimodes.

5. Dispositif (1) selon la revendication 1, **caractérisé en ce que** l'au moins une seconde fibre optique (5) est constituée de fibres monomodes.

6. Dispositif (1) selon la revendication 1, **caractérisé en ce que** la première unité de traitement (4) met en oeuvre des tables de consultation.

7. Dispositif (1) selon la revendication 1, **caractérisé en ce que** la première unité de traitement (4) est agencée pour calculer la température de la source du premier signal optique en temps réel.

8. Dispositif (1) selon la revendication 1, **caractérisé en ce que** la gaine (10), au moins une première fibre (2) et au moins une seconde fibre (5) ne comportent pas de composants actifs.

9. Dispositif (1) selon la revendication 1, **caractérisé en ce que** le dispositif est configuré pour surveiller une machine électrique.

10. Dispositif (1) selon la revendication 1, **caractérisé en ce que** le capteur (15) comprend un modulateur acousto-optique ou un dispositif mécanique de type micromachine.
